# EUROPÄISCHE PATENTSCHRIFT

(11) **EP 1 558 862 B1**
(45) Veröffentlichungstag und Bekanntmachung des Hinweises auf die Patenterteilung: **15.04.2009**
(21) Anmeldenummer: 03810373.5
(22) Anmeldetag: 03.11.2003
(51) Int. Cl.: F16H 59/02

(54) **SCHALTVORRICHTUNG ZUR BERTRAGUNG VON SCHALTBEFEHLEN AN EIN AUTOMATIKGETRIEBE**
SHIFTING DEVICE FOR TRANSMITTING SHIFTING COMMANDS TO AN AUTOMATIC GEARBOX
DISPOSITIF DE CHANGEMENT DE VITESSE POUR TRANSMETTRE DES INSTRUCTIONS DE CHANGEMENT DE VITESSE A UNE BOITE DE VITESSES AUTOMATIQUE

(30) Priorität: 06.11.2002 DE 10252009
(43) Veröffentlichungstag der Anmeldung: 03.08.2005
(73) Patentinhaber: ZF Lemförder Metallwaren AG, 49448 Lemförde (DE)
(72) Erfinder: GIEFER, Andreas, 49448 Lemförde (DE); MEYER, Jörg, 49419 Wagenfeld (DE)
(86) Internationale Anmeldenummer: PCT/DE2003/003656
(87) Internationale Veröffentlichungsnummer: WO 2004/042256

(56) Entgegenhaltungen:
- WO-A-00/30885
- FR-A- 2 797 229
- US-A1- 2001 004 851

## Beschreibung

Die Erfindung betrifft eine Schaltvorrichtung zur Übertragung von Schaltbefehlen an ein Automatikgetriebe eines Kraftfahrzeuges mit einem Gehäuse und/oder einem Rahmen, einem Schalthebel, der um eine Wählachse und eine Schaltachse schwenkbar ausgeführt ist, wobei die Wählachse und die Schaltachse vorzugsweise orthogonal zueinander angeordnet sind, und der Schalthebel zumindest in eine erste Schaltgasse und eine zweite Schaltgasse schaltbar ist, wobei die erste Schaltgasse vorzugsweise Schaltprogramme (P, N, R und D) eines Automatikgetriebes schaltet und die zweite Schaltgasse vorzugsweise manuelle Tippbefehle umsetzt.

Eine ähnliche Schaltvorrichtung ist aus der Patentanmeldung DE 198 53 934 A1 der Anmelderin bekannt. Diese Schaltvorrichtung verfügt bereits über zwei Schaltgassen, wobei die erste, auch Automatikschaltgasse genannt, zur Anwahl von Automatikgetriebestufen und die zweite, mit Sequenzschaltgasse bezeichnet, zum manuellen Auf- und Abwärtsbewegen von Getriebestufen vorgesehen ist. Weiterhin verfügt diese Schaltvorrichtung über eine Wählgasse, die zum Wechseln zwischen Automatikschaltgasse und Sequenzschaltgasse dient. In Figur 13a dieser Schrift wird eine einfache Übersicht der Schaltpositionen gezeigt, wobei die Sequenzschaltgasse mit SG1, die Automatikschaltgasse mit AG und die Wählgasse mit WG 1 abgekürzt wird.

Um zwischen der Automatikschaltgasse und Sequenzschaltgasse wechseln zu können und in den jeweiligen Gassen die Schaltbefehle mechanisch umzusetzen, ist eine aufwendige Mechanik notwendig. In Figur 18 wird die Schaltmechanik gezeigt Über den Schalthebel, der schwenkbar bezüglich der Wählachse und den Schaltachsen ausgeführt ist, werden die Schaltbefehle, zum Beispiel mittels eines Seilzuges umgesetzt.

Ein Problem bei der bekannten Schaltvorrichtung für Automatikgetriebe mit zusätzlicher Sequenzschaltgasse (Tippgasse) liegt darin, dass die Schalthebelbewegungen durch den Fahrer über einen zweiten Hebel oder Seilhebel mittels eines Seilzuges zum Getriebe übertragen werden. Wechselt der Fahrer von der Automatikschaltgasse, die die Programme des Automatikgetriebes schaltet, in die Sequenzschaltgasse (Tippgasse), wird der Schalthebel mechanisch vom Seilzug getrennt, damit bei der Tippbewegung kein Seilweg entsteht. Um diesen Schaltmechanismus realisieren zu können, ist eine aufwendige Mechanik notwendig, die viel Bauraum benötigt. Außerdem müssen aufgrund möglicher hoher Missbrauchskräfte teure Bauteile eingesetzt werden.

Ein weiteres Problem der bekannten Schaltvorrichtung für Automatikgetriebe mit zusätzliche manueller Gasse (Tippgasse) ist, dass aufgrund der aufwendigen Mechanik die Kinematik während des Schaltvorganges besonders "schwergängig" also kraftaufwendig und somit unkomfortabel ist.

Eine weitere Schaltvorrichtung, nach dem Oberbegriff des Anspruchs 1, zur Übertragung von Schaltbefehlen an ein Automatikgetriebe eines Kraftfahrzeuges offenbart die FR-A-2797229. Diese Vorrichtung weist ein Gehäuse und einen Schalthebel auf, der um eine Wählachse und eine Schaltachse schwenkbar ist, wobei die Schwenkachse und die Wählachse senkrecht zueinander angeordnet sind. Der Schalthebel ist dabei in eine erste und eine zweite Schaltgasse schaltbar, wobei die erste Schaltgasse die Schaltstufen des Automatikgetriebes schaltet und in der zweiten Schaltgasse manuelle Tippbefehle umgesetzt werden können. Es hierbei ein Schaltschlitten vorgesehen, der in einer Ebene linear bewegbar gelagert ist und über eine Kraftkopplung die Bewegung des Schalthebels in der ersten Schaltgasse in eine lineare Verschiebung des Schaltschlittens umsetzt und durch eine Bewegung des Schalthebels in der zweien Schaltgasse eine Entkopplung der Bewegung des Schalthebels vom Schaltschlitten bewirkt.

Die US 2001/0004851 A1 zeigt eine weitere ähnliche Schaltvorrichtung, wobei hier der Schaltschlitten als ein schwenkbare Schaltplatte ausgebildet ist, die bei einer Schwenkbewegung des Schalthebels in einer ersten Schaltgasse Schaltpositionen eines Automatikgetriebes schaltet. Wird der Schalthebel um die Wählachse in eine zweite Schaltgasse bewegt, können nunmehr manuelle Tippbefehl umgesetzt werden. Hierzu ist die Schaltplatte über ein Verriegelungselement welches in eine Ausnehmung des Gehäuses eingreift gegenüber dem Gehäuse festgesetzt. Das Verriegelungselement ist mittels einer Feder gegenüber der Schwenkplatte federbelastet, so dass sich das Verriegelungselement bei einer Bewegung des Schalthebels in die zweite Schaltgasse selbsttätig in die Ausnehmung verschiebt.

Es ist daher Aufgabe der Erfindung, eine Schaltvorrichtung für Automatikgetriebe mit zusätzlicher Gasse (Tippgasse) zur Übertragung von Schaltbefehlen an ein Automatikgetriebe eines Kraftfahrzeuges zur Verfügung zu stellen, welche gegenüber den bekannten Schaltvorrichtungen wesentlich einfacher aufgebaut ist und damit kostengünstiger produziert werden kann. Eine solche Schaltvorrichtung sollte trotz einfacherer Bauweise gleichzeitig einen verbesserten Schaltkomfort bieten.

Die Aufgabe der Erfindung wird durch eine Schaltvorrichtung mit den Merkmalen des Anspruches 1 gelöst. Vorteilhafte Weiterbildungen der Erfindung sind Gegenstand untergeordneter Patentansprüche.

Demgemäss wird vorgeschlagen, eine Schaltvorrichtung zur Übertragung von Schaltbefehlen an ein Automatikgetriebe eines Kraftfahrzeuges mit einem Gehäuse und/oder einem Rahmen sowie einem Schalthebel auszustatten, wobei der Schalthebel um eine Wählachse und eine Schaltachse schwenkbar ausgeführt ist, die Wählachse und die Schaltachse vorzugsweise orthogonal zueinander angeordnet sind, und der Schalthebel zumindest in eine erste Schaltgasse und eine zweite Schaltgasse schaltbar ist. In der ersten Schaltgasse sind vorzugsweise Schaltprogramme (P, N, R und D) eines Automatikgetriebes schaltbar und in der zweiten Schaltgasse vorzugsweise manuelle Tippbefehle. Die Verbesserung kann nun darin gesehen werden, dass ein Schaltschlitten vorgesehen ist, der in einer Ebene linear bewegbar gelagert und so ausgebildet ist, dass durch eine Bewegung des Schalthebels in die erste Schaltgasse eine lineare Verschiebung des Schaltschlittens ermöglicht wird und durch eine Bewegung des Schalthebels in die zweite Schaltgasse eine Entkoppelung der Bewegung des Schaltschlitten bewirkt wird.

Hierdurch wird ein einfacher Aufbau der Schaltvorrichtung erreicht, wodurch der Bauraum der neuen Schaltvorrichtung sehr kompakt ausfällt. Außerdem kann aufgrund der unkomplizierten Mechanik die Kinematik während des Schaltvorganges besonders "leichtgängig", also kräfteschonend und somit besonders komfortabel ausgeführt werden.

Zur Fixierung des Schaltschlittens ist ein Verriegelungselement an diesem angeordnet, das im Verriegelungszustand in das Gehäuse/oder den Rahmen eingreift. Das Verriegelungselement wird durch die Bewegung des Schalthebels in der Wählachse betätigt wird und fixiert den Schaltschlitten, sobald sich der Schalthebel in der zweiten Schaltgasse befindet. Durch dieses Verriegelungselement wird der Schaltschlitten im Gehäuse sicher arretiert, während der Fahrer in der zweiten Schaltgasse Tippbefehle an die "Tiptronic" ausführt. Ein solches Verriegelungselement kann als ein Hebel ausgeführt sein, der einen Haken aufweist und in Ausnehmungen des Gehäuses und/oder des Rahmens eingreift.

Um in der ersten Schaltgasse die Schaltprogramme (P, N, R und D) des Automatikgetriebes schalten zu können, sollte eine Kopplung zwischen dem Schaltschlitten und dem Automatikgetriebe bestehen. Solch eine Kopplung kann auf verschiedene Arten realisiert werden.

Beispielsweise können zwischen dem Schaltschlitten und dem Automatikgetriebe zumindest teilweise mechanische Elemente zur Übertragung der Handkräfte angebracht werden, die Schaltprogramme im Automatikgetriebe (P, N, R und D) schalten. Hierfür eignet sich zum Beispiel ein einfacher Seilzug, ein Bowdenzug oder auch ein mechanisches Gestänge.

Eine weitere Ausführung der Kopplung kann zumindest teilweise durch elektrische Elemente realisiert werden. So kann die Schaltposition des Schaltschlittens zum Beispiel mittels Reed-Kontakten detektiert und die detektierten Positionen über einen Stellmotor, der die Cetriebepositionen schaltet, umgesetzt werden. Hierdurch sind die manuellen Kräfte zum Schalten der Automatikpositionen reduzierbar oder können Sicherheitsfunktionen eingebaut werden.

Alternativ kann die Kopplung auch zumindest teilweise durch optische Elemente realisiert sein. Die Position des Schaltschlittens wird optisch und somit kontaktlos detektiert. Der optische Detektor, der ein Abstandslaser sein kann, übermittelt die Schaltprogramme an einen weiteren Schaltmechanismus, der dann die Automatikgetriebepositionen (P, N, R und D) schaltet. Auch bei dieser Ausführung der Kopplung können die manuellen Kräfte zum schalten der Automatikpositionen reduziert werden.

In der zweiten Schaltgasse können manuelle Tippbefehle umgesetzt werden, insbesondere die Wahl der Fahrstufe bei der "Tiptronic". Um das Hoch- und Abschalten der Fahrstufen, wobei diese Optionen meist mit "+" und "-" gekennzeichnet sind, besonders direkt und schnell zu ermöglichen, sollte zur Umsetzung der Schaltbefehle elektrische und/oder optische Schalter eingesetzt werden.

In einer besonderen Ausführung der Schaltvorrichtung ist zur Kraftkopplung von Schalthebel und Schaltschlitten eine Verlängerung des Schalthebels über den Drehpunkt der Schaltachsen hinaus vorgesehen, die mittelbar oder unmittelbar in den Schaltschlitten eingreift. Durch die Dimensionierung der Schalthebelverlängerung kann hierdurch besonders einfach entweder der Schaltweg des Schalthebels oder die Kraft zur Betätigung des Schalthebels in der Wähl- und Schaltachse variiert werden.

Weiterhin sollte die Schaltungsvorrichtung über Mittel zur Entriegelung des Schaltschlittens verfügen, welche die Kraftkopplung zwischen Schaltschlitten und Schalthebel löst, sobald der Schalthebel sich in der zweiten Schaltgasse befindet. Hierdurch wird ermöglicht, dass mit dem nun entkoppelten Schalthebel weitere Schaltbefehle ausgeführt werden können.

Ein solches Mittel zur Entriegelung kann ein Entriegelungshebel sein, der schwenkbar um eine Achse des Schaltschlittens und um diese verschiebbar gelagert ist und in einer ersten Verriegelungsstellung mit dem Schaltschlitten verriegelt und in einer zweiten Stellung gegenüber dem Schaltschlitten verschiebbar ausgeführt ist. Zum Verriegeln kann der Entriegelungshebel mit einem Haken an einer Erhebung am Schaltschlitten angreifen. Zum Entriegeln wird der Entriegelungshebel geschwenkt, wodurch der Haken sich von der Erhebung am Schaltschlitten löst und die Verbindung Schaltschlitten und Schalthebel trennt. Wird der Entriegelungshebel im Bereich der Schwenkachse beispielsweise mit einem Langloch versehen, so ermöglicht dieses Langloch die Verschiebung des Schalthebels. Durch die Lochlänge kann der Bewegungsspielraum des Schalthebels bestimmt werden. Innerhalb dieses Bewegungsspielraumes wird keine Kraft auf den Schaltschlitten übertragen.

In einer weiteren vorteilhaften Ausführung der Schaltvorrichtung ist der Schaltschlitten mit Aussparungen versehen. In diese Aussparungen greift der Schalthebel ein und die Aussparungen sind derart ausgestaltet, dass in der zweiten Schaltgasse eine Relativbewegung zwischen Schalthebel und Schaltschlitten möglich ist und in der ersten Schaltgasse eine Kraftkopplung der Bewegung zwischen Schalthebel und Schaltschlitten gegeben ist.

In einer besonders komfortablen Ausführung der Schaltungsvorrichtung, wird der Schalthebel mittelbar oder unmittelbar in einer Führungskurvatur geführt, um die Schaltprogramme (P, N, R und D) des Automatikgetriebes zu bestimmen und ein ergonomisches Schaltempfinden zu erzeugen. Diese Führungskurvatur kann so ausgeführt sein, dass für jede Schaltposition eines Schaltprogramms (P, N, R und D) eine "Ausbuchtung" zum Beispiel im Gehäuse vorgesehen ist. In solch eine Ausbuchtung kann ein unter Federkraft stehender Bolzen oder eine Kugel gedrückt werden. Hierdurch entseht ein spürbares Einrasten des Schalthebels in jeder Schaltposition wodurch außerdem die Schaltpräzision unterstützt wird.

Um den Schaltkomfort der neuen Schaltvorrichtung weiter zu erhöhen, ist es vorteilhaft, die Bewegung des Schalthebels durch eine Lagerung zu unterstützen.

Diese Lagerung kann als Kugelgelenklagerung ausgeführt sein. So kann am Schalthebel eine Kugel angebracht sein, die in einer komplementären Kugelpfanne geführt wird. Die Kugelpfanne kann zum Beispiel im Gehäuse eingearbeitet sein und die Kugel zumindest teilweise umschließen. Zwischen Kugel und Kugelpfanne kann ein Schmierstoff eingebracht werden, um eine reibungsoptimierte Bewegung zu gewährleisten.

Alternativ zur Lagerung mit einem Kugelgelenklager, kann der Schalthebel über zwei überkreuz stehende Achsen gelagert sein.

Es ist besonders günstig, wenn die Schaltvorrichtung eine dritte Schaltgasse aufweist, wobei die beiden außenliegenden Schaltgassen vorzugsweise symmetrisch zur mittleren Schaltgasse ausgebildet sind. So kann beispielsweise über die mittlere Schaltgasse das Schaltprogramm des Automatikgetriebes geschaltet werden und die beiden äußeren Schaltgassen stehen zur Umsetzung der Tippbefehle zum Beispiel einer "Tiptronic" zur Verfügung.

Wird die Schaltvorrichtung in dieser symmetrischen Bauweise ausgeführt, so kann die selbe Schaltvorrichtung für Fahrzeuge, die sowohl als Rechtlenker oder als Linkslenker ausgeführt sind, eingesetzt werden. Dies ist zum Beispiel dadurch möglich, dass lediglich die Schaltkulisse, in der sich der Schalthebel bewegt, an die Art des Fahrzeugs angepasst wird

Weitere Merkmale und Vorteile der Erfindung ergeben sich aus den Unteransprüchen und der nachfolgenden Beschreibung bevorzugter Ausführungsbeispiele unter Bezugnahme auf die Zeichnungen.

Die Figuren zeigen im Einzelnen:
- Figur 1:: Seitenansicht einer ersten Ausführung der Schaltvorrichtung, wobei der Schalthebel in der zentralen Führungskurvatur geführt wird;
- Figur 2 :: 3-D Seitenansicht schräg von oben auf die Schaltvorrichtung aus Figur 1;
- Figur 3:: 3-D Ansicht schräg von vorne auf die Schaltvorrichtung aus Figur 2, wobei der Schalthebel in der zweiten seitlichen Führungskurvatur geführt wird;
- Figur 4:: 3-D Seitenansicht schräg von oben auf die Schaltvorrichtung aus Figur 3;
- Figur 5:: 3-D Seitenansicht schräg von oben auf die Schaltvorrichtung aus Figur 4, jedoch ohne Verriegelungshebel am Schaltschlitten;
- Figur 6:: 3-D Seitenansicht auf eine zweite Ausführung der Schaltvorrichtung mit Ver- und Entriegelungsmechanismus des Schaltschlittens, wobei die Bewegung des Schaltschlitten nicht gesperrt wird;
- Figur 7:: Weitere 3-D Seitenansicht auf die zweite Ausführung der Schaltvorrichtung aus Figur 6, jedoch mit gesperrtem Schaltschlitten;
- Figur 8:: Seitlicher Schnitt durch die Schaltvorrichtung aus der Figur 6.

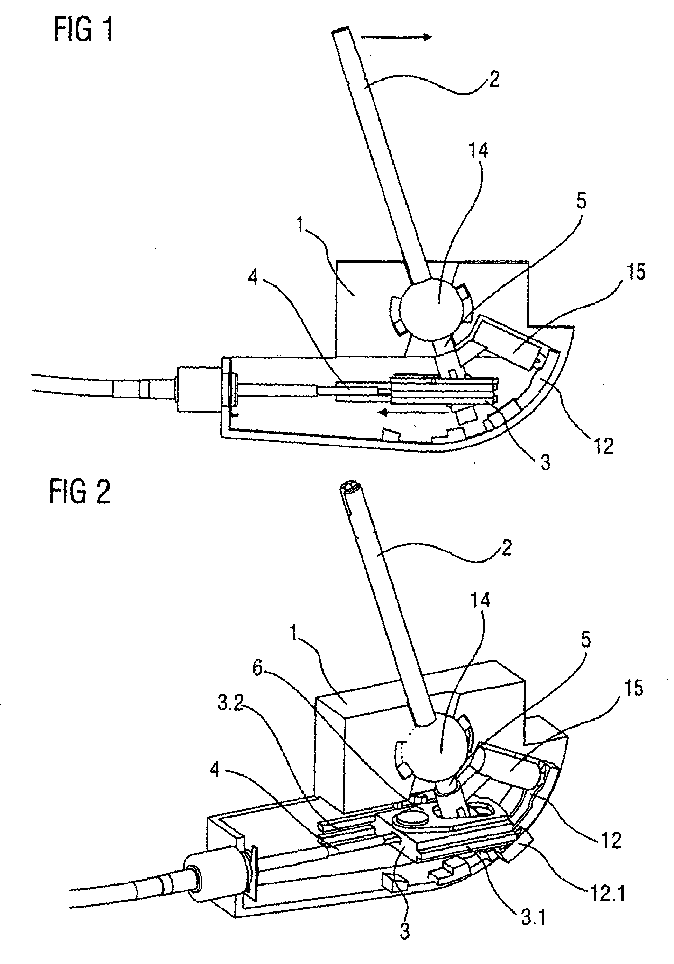

Die Figur 1 zeigt in einer Seitenansicht eine erste Ausführung der neue Schaltungsvorrichtung, wobei der Schalthebel 2 in der zentralen Führungskurvatur 12 geführt wird. In einer Gehäusehälfte 1 ist der Schalthebel 2 mit einem Kugelgelenklager 14 schwenkbar um zwei Achsen gelagert. Der Schalthebel 2 besitzt unterhalb des Kugelgelenklagers 14 eine Verlängerung 5. Diese Verlängerung 5 ist mit dem Schaltschlitten 3 gekoppelt. Der Schaltschlitten 3 hat über einen Seilzug 4 eine Verbindung zum Automatikgetriebe des Kraftfahrzeuges. Wird der Schalthebel 2 von der in Figur 1 gezeigten Position nach rechts bewegt, so wird der Schaltschlitten 3 nach links bewegt. Durch die Bewegung des Schaltschlittens 3 werden mit dem Seilzug 4 die unterschiedlichen Programme (P, N, R und D) des Automatikgetriebes angewählt. Mit einem Führungselement 15, das am Ende des Schalthebels 2 befestigt ist und das in einer zentralen Führungskurvatur 12 eingreift, wird die Bewegung des Schalthebels 2 während der Anwahl eines bestimmten Automatikprogramms geführt.

Die Figur 2 zeigt eine 3-D Seitenansicht schräg von oben auf die Schaltvorrichtung aus Figur 1. In dieser Ansicht ist besonders gut der Schaltschlitten 3 und dessen Verriegelungshebel 6 zu erkennen. Über den Verriegelungshebel 6, der durch die Bewegung des Schalthebels 2 geschwenkt werden kann, wird die Bewegung des Schaltschlittens 3 gesperrt. Der Schaltschlitten 3, der über einen Seilzug 4 mit dem Automatikgetriebe verbunden ist, bewegt sich nur auf einer linearen Bahn. Diese Bewegung des Schaltschlittens 3 wird auf der linearen Bahn geführt. So ist rechts und links am Schaltschlitten 3 je eine Führungsnase 3.1 angebracht, die in je einer Führungsnut 3.2 in den Gehäusehälften 1 geführt werden.

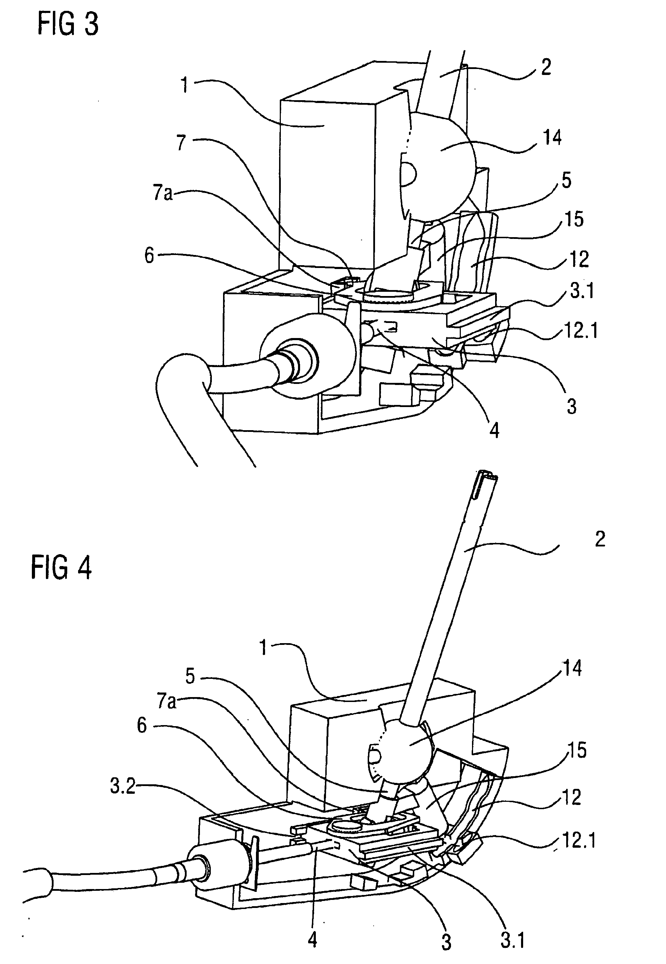

Die Figuren 3 und 4 zeigen die Schaltvorrichtung in unterschiedlichen perspektivischen Ansichten. Im Unterschied zu den Figuren 1 und 2 ist der Schalthebel 2 nicht in der ersten Schaltgasse, in der die Schaltprogramme (P, N, R und D) eines Automatikgetriebes geschaltet werden, sondern in der zweite Schaltgasse, in der manuelle Tippbefehle umgesetzt werden können. Das Führungselement 15 ist nicht mehr in der zentralen Führungskurvatur 12, sondern greift in die zweite seitliche Führungskurvatur 12.2 ein (nicht in den Figuren 3 und 4 sichtbar). Zu dieser zweiten seitlichen Führungskurvatur 12.2 ist eine erste seitliche Führungskurvatur 12.1 spiegelbildlich bezüglich der zentralen Führungskurvatur 12 angeordnet. Wird der Schalthebel 2, die Schalthebelverlängerung 5 und das Führungselement 15 in diese Position bewegt, so wird der Verriegelungshebel 6, der am Schaltschlitten 3 angebracht ist, geschwenkt. Hierdurch rastet der Haken 7 des Verriegelungshebels 6 an einem dafür bestimmten Eingriff 7a an der Gehäusehälfte 1 ein, wodurch in dieser Position die Bewegung des Schaltschlittens 3 gesperrt wird.

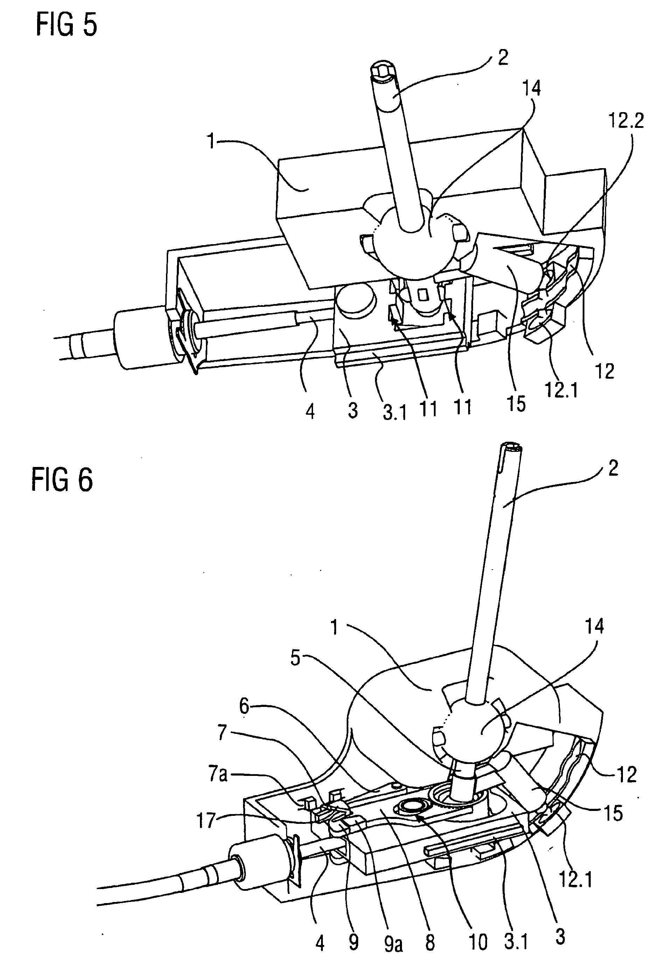

Die Figur 5 zeigt eine weitere 3-D Seitenansicht schräg von oben auf die Schaltvorrichtung aus Figur 4, jedoch ohne den Verriegelungshebel 6 am Schaltschlitten 3. Der Schaltschlitten 3 weist in diesem Bereich vier Aussparungen 10 auf. Ist der Schalhebel 2 in der Schaltgasse, die manuelle Tippbefehle umsetzt, so kann die Verlängerung 5 des Schalthebels 2 zwischen den Aussparungen 11, die Langlöcher 10 sein können, hin und her bewegt werden. Hierzu wird das Führungselement 15 in der zweiten seitlichen Führungskurvatur 12.2 geführt. Würde der Schalthebel 2 und das Führungselement 15 in die Position der zentralen Führungskurvatur 12 bewegt, so wäre der Schalthebel 2 im Bereich der Verengungen des Schaltschlitten 3 mit dem Schaltschlitten 3 in Kontakt. Hierdurch könnte durch die Bewegung des Schalthebels 2 der Schaltschlitten 3 und somit über den verbundenen Seilzug 4 verschieden Programme des Automatikgetriebes angewählt werden.

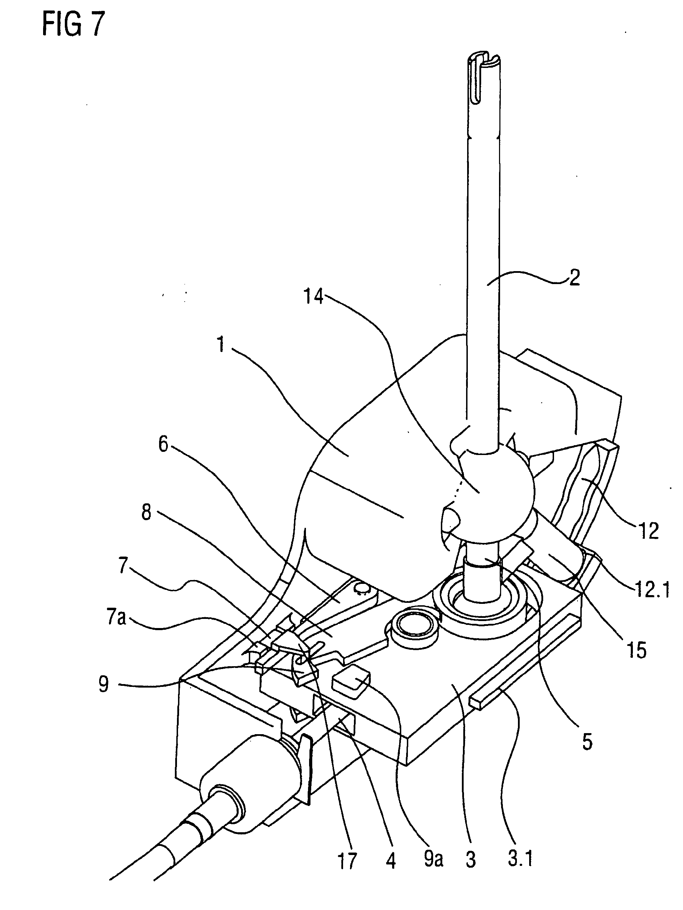

Die Figuren 6 und 7 zeigen perspektivische Ansichten auf eine weitere Ausführung der neue Schaltvorrichtung mit einem besonderen Ver- und Entriegelungsmechanismus des Schaltschlittens.

Die Figur 6 zeigt eine 3-D Seitenansicht auf eine zweite Ausführung der Schaltvorrichtung mit Ver- und Entriegelungsmechanismus des Schaltschlittens 3, wobei die Bewegung des Schaltschlitten 3 nicht gesperrt wird. Der gezeigte Verriegelungsmechanismus und Entriegelungsmechanismus besteht aus einem Verriegelungshebel 6 und einem Entriegelungshebel 8, die beide am Schaltschlitten 3 angeordnet sind. Der Verriegelungshebel 6 kann mit einem Haken 7 an einem Eingriff 7a an der Gehäusehälfte 1 eingreifen und somit die lineare Bewegung des Schaltschlittens 3 sperren. Der Entriegelungshebel 8, der an einem Hebelende mit der Verlängerung 5 des Schalthebels 2 verbunden ist und am anderen Hebelende wahlweise über einen Haken 9 an einem Eingriff 9a des Schaltschlittens befestigt ist, kann die Bewegung des Schalthebels 2 mit dem Schaltschlitten 3 koppeln oder entkoppeln. Die Bewegung des Verriegelungshebels 6 und des Entriegelungshebels 8 ist über ein Verbindungselement 17 aneinander gekoppelt. Wie in Figur 6 gezeigt, befindet sich der Schalthebel 2 und das Führungselement 15 in der zentralen Führungskurvatur 12. In dieser Stellung ist der Verriegelungshebel 6 offen, dass heißt der Haken 7 greift nicht in den Eingriff 7a des Gehäuses ein, wodurch sich der Schaltschlitten 3 abhängig von der Bewegung des Schalthebels 2 bewegen kann. Gleichzeitig ist der Entriegelungshebel 8 geschlossen, dass heißt der Haken 9 greift in den Eingriff 9a des Schaltschlittens 3 ein, wodurch der Schaltschlitten 3 mit dem Schalthebel 2 gekoppelt ist. In dieser Stellung des Schalthebels 2 können die verschiedenen Programme des Automatikgetriebes geschaltet werden, wobei die Bewegung des Schalthebels 2 über den Schaltschlitten und den Seilzug 4 an das Automatikgetriebe weitergeleitet wird.

Die Figur 7 zeigt eine weitere 3-D Seitenansicht auf die zweite Ausführung der Schaltvorrichtung aus Figur 6. Im Unterschied dazu, ist das Führungselement 15 des Schalthebels 2 in der ersten seitlichen Führungskurvatur 12.1. Hierdurch hat sich die Stellung des Ver- und Entriegelungsmechanismus geändert. In dieser Stellung ist der Verriegelungshebel 6 geschlossen, das heißt der Haken 7 greift in den Eingriff 7a der Gehäusehälfte 1 ein, wodurch die Bewegung des Schaltschlitten 3 gesperrt ist. Gleichzeitig ist der Entriegelungshebel 8 offen, das heißt der Haken 9 greift nicht in den Eingriff 9a des Schaltschlittens 3 ein, wodurch der Schaltschlitten 3 vom Schalthebels 2 entkoppelt ist. In diese Stellung des Schalthebel 2 können manuell die Auf- und Abwärtsbewegen von Getriebestufen geschaltet werden.

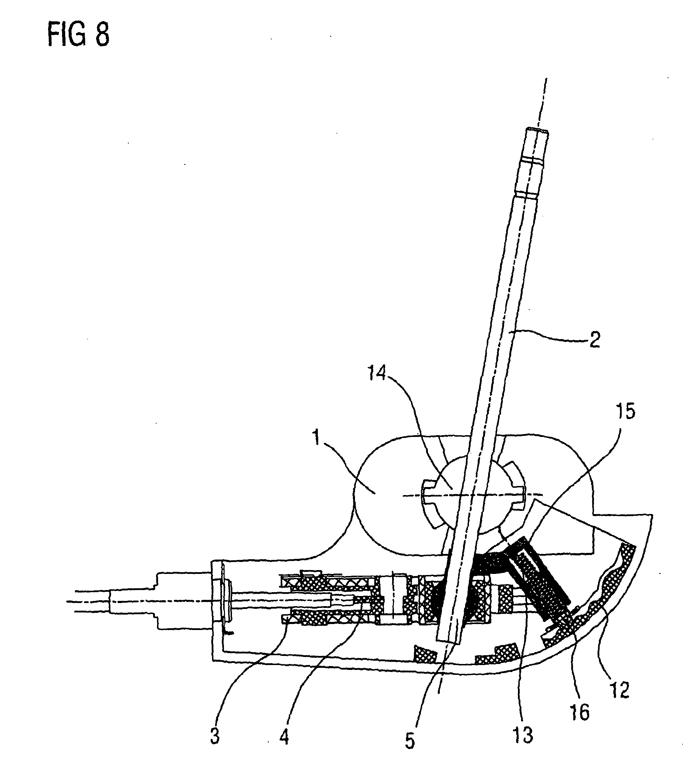

Die Figur 8 zeigt einen Schnitt durch die Schaltvorrichtung aus der Figur 6. In einer Gehäusehälfte 1 ist ein Schalthebel 2 mit einem Kugelgelenklager 14 schwenkbar um zwei Achsen gelagert. Der Schalthebel 2 besitzt unterhalb des Kugelgelenklagers 14 eine Verlängerung 5. Diese Verlängerung 5 ist mit dem Schaltschlitten 3 gekoppelt. Der Schaltschlitten 3 hat über einen Seilzug 4 eine Verbindung zum Automatikgetriebe des Kraftfahrzeuges. In dieser Schnittansicht ist besonders gut die Funktionsweise des Führungselementes 15 zu erklären, das sich hier in der zentralen Führungskurvatur 12 bewegt. Das Führungselement 15 besteht aus einem hohlen Zylinder, in dem sich eine Druckfeder 13 befindet. Die Druckfeder 13 drückt einen Stift 16 mit abgerundeten Kopf gegen die Fläche der zentralen Führungskurvatur12. Die zentrale Führungskurvatur 12 weist in Figur 8 fünf Ausbuchtungen auf. In diese Ausbuchtungen kann der Stift 16 einrasten. Somit stellen die fünf Ausbuchtungen "stabile Gleichgewichtslagen" dar, die das Führungselement 15 und somit den verbundenen Schalthebel 2 in dieser Lage einrasten lassen. Diesen fünf Positionen können fünf möglichen Schaltpositionen im Automatikgetriebe zugeordnet werden.

Insgesamt wird also durch die Erfindung eine Schaltvorrichtung mit zusätzlicher Gasse (Tippgasse) zur Übertragung von Schaltbefehlen an ein Automatikgetriebe eines Kraftfahrzeuges zur Verfügung gestellt, welche gegenüber den bekannten Schaltvorrichtungen wesentlich einfacher aufgebaut ist und damit kostengünstiger produziert werden kann. Eine solche Schaltvorrichtung bietet trotz einfacherer Bauweise gleichzeitig einen verbesserten Schaltkomfort.

### Bezugszeichenliste

- 1: Gehäusehälfte
- 2: Schalthebel
- 3: Schaltschlitten
- 3.1: Führungsnase des Schaltschlittens
- 3.2: Führungsnut im Gehäuse
- 4: Seilzug
- 5: Verlängerung des Schalthebels
- 6: Verriegelungshebel
- 7: Haken des Verriegelungshebel
- 7a: Eingriff für Haken des Verriegelungshebel am Gehäuse
- 8: Entriegelungshebel
- 9: Haken des Entriegelungshebel
- 9a: Eingriff für Haken des Entriegelungshebel am Schaltschlitten
- 10: Langloch
- 11: Aussparung im Schaltschlitten
- 12: zentrale Führungskurvatur
- 12.1: erste seitliche Führungskurvatur
- 12.2: zweite seitliche Führungskurvatur
- 13: Druckfeder
- 14: Kugelgelenklager
- 15: Führungselement
- 16: Stift
- 17: Verbindungselement von Entriegelungshebel und Verriegelungshebel

## Patentansprüche

1. Schaltvorrichtung zur Übertragung von Schaltbefehlen an ein Automatikgetriebe eines Kraftfahrzeuges, mit:
- einem Gehäuse (1) und/oder einem Rahmen,
- einem Schalthebel (2), der um eine Wählachse und eine Schaltachse schwenkbar ausgeführt ist, wobei die Wählachse und die Schaltachse vorzugsweise orthogonal zueinander angeordnet sind, und der Schalthebel (2) zumindest in eine erste Schaltgasse und eine zweite Schaltgasse schaltbar ist, wobei die erste Schaltgasse vorzugsweise Schaltprogramme P, N, R und D eines Automatikgetriebes schaltet und die zweite Schaltgasse vorzugsweise manuelle Tippbefehle umsetzt, wobei
ein Schaltschlitten (3) vorgesehen ist, der in einer Ebene linear bewegbar gelagert ist und so ausgebildet ist, dass durch eine Kraftkopplung die Bewegung des Schalthebels (2) in der ersten Schaltgasse eine lineare Verschiebung des Schaltschlittens bewirkt und durch eine Bewegung des Schalthebels (2) in der zweiten Schaltgasse eine Entkopplung der Bewegung des Schalthebels (2) vom Schaltschlitten (3) bewirkt wird, **dadurch gekennzeichnet dass** ein Verriegelungselement (6) zur Fixierung des Schaltschlittens (3) vorgesehen ist, das durch die Bewegung des Schalthebels (2) in der Wählachse betätigt wird und den Schaltschlitten (3) fixiert, sobald sich der Schalthebel (2) in der zweiten Schaltgasse befindet, wobei das Verriegelungselement (6) schwenkbar am Schaltschlitten (3) angeordnet ist und im Verriegelungszustand in das Gehäuse (1) und /oder den Rahmen eingreift, wobei das Verriegelungselement (6) durch die Bewegung des Schalthebels (2) in der wählachse verschwenkt wird.

2. Schaltvorrichtung gemäß dem voranstehenden Anspruch 1, **dadurch gekennzeichnet, dass** eine Kopplung zwischen Schaltschlitten (3) und Automatikgetriebe vorgesehen ist.

3. Schaltvorrichtung gemäß dem voranstehenden Anspruch 2, **dadurch gekennzeichnet, dass** die Kopplung zumindest teilweise mechanische Elemente umfasst, vorzugsweise einen Seilzug (4).

4. Schaltvorrichtung gemäß einem der voranstehenden Ansprüche 2 und 3, **dadurch gekenneichnet, dass** die Kopplung zumindest teilweise durch elektrische Elemente realisiert wird.

5. Schaltvorrichtung gemäß einem der voranstehenden Ansprüche 2 bis 4, **dadurch gekennzeichnet, dass** die Kopplung zumindest teilweise durch optische Elemente realisiert wird.

6. Schaltvorrichtung gemäß einem der voranstehenden Ansprüche 1 bis 5, **dadurch gekennzeichnet, dass** zur Umsetzung der Schaltbefehle in der zweiten Schaltgasse, elektrische und/oder optische Schalter angebracht sind.

7. Schaltvorrichtung gemäß einem der voranstehenden Ansprüche 1 bis 6,
**dadurch gekennzeichnet, dass** zur Kraftkopplung von Schalthebel (2) und Schaltschlitten (3) eine Verlängerung (5) des Schalthebels (2) vorgesehen ist, die mittelbar oder unmittelbar in den Schaltschlitten (3) eingreift.

8. Schaltvorrichtung gemäß dem voranstehenden Anspruch 7, **dadurch gekennzeichnet, dass** das Verriegelungselement (6) einen Haken (7) aufweist und in Ausnehmungen (7a) des Gehäuses (1) und/oder des Rahmens eingreift.

9. Schaltvorrichtung gemäß einem der voranstehenden Ansprüche 1 bis 8, **dadurch gekennzeichnet, dass** Mittel zur Entriegelung des Schaltschlittens (3) vorgesehen sind, welche die Kraftkopplung zwischen Schaltschlitten (3) und Schalthebel (2) entriegelt, sobald der Schalthebel (2) sich in der zweiten Schaltgasse befindet.

10. Schaltvorrichtung gemäß dem voranstehenden Anspruch 9, **dadurch gekennzeichnet, dass** das Mittel zur Entriegelung ein Entriegelungshebel (8) ist, der schwenkbar um eine Achse des Schaltschlittens (3) und um diese verschiebbar gelagert ist und in einer ersten Verriegelungsstellung mit dem Schaltschlitten (3) verriegelt ist und in einer zweiten Stellung gegenüber dem Schaltschlitten (3) verschiebbar ausgeführt ist.

11. Schaltvorrichtung gemäß einem der voranstehenden Ansprüche 1 bis 10, **dadurch gekennzeichnet, dass** der Schaltschlitten (3) Aussparungen (11) aufweist, in die der Schalthebel (2) eingreift und die Aussparungen (11) derart ausgestaltet sind, dass in der zweiten Schaltgasse eine Relativbewegung zwischen Schalthebel (2) und Schaltschlitten (3) möglich ist und in der ersten Schaltgasse eine Kraftkopplung der Bewegung zwischen Schalthebel (2) und Schaltschlitten (3) gegeben ist.

12. Schaltvorrichtung gemäß einem der voranstehenden Ansprüche 1 bis 11, **dadurch gekennzeichnet, dass** der Schalthebel (2) mittelbar oder unmittelbar in einer Führungskurvatur (12) geführt wird, um die Schaltprogramme P, N, R und D des Automatikgetriebes zu bestimmen und ein ergonomisches Schaltempfinden zu erzeugen.

13. Schaltvorrichtung gemäß einem der voranstehenden Ansprüche 1 bis 12, **dadurch gekennzeichnet, dass** der Schalthebel (2) über ein Kugelgelenk (14) gelagert ist.

14. Schaltvorrichtung gemäß einem der voranstehenden Ansprüche 1 bis 12, **dadurch gekennzeichnet, dass** der Schalthebel (2) mit zwei überkreuz stehende Achsen gelagert ist.

15. Schaltvorrichtung gemäß einem der voranstehenden Ansprüche 1 bis 14, **dadurch gekennzeichnet, dass** eine dritte Schaltgasse vorgesehen ist, wobei die beiden außenliegenden Schaltgassen vorzugsweise symmetrisch zur mittleren Schaltgasse ausgebildet sind.

## Claims

1. Shifting device for transmitting shifting commands to an automatic gearbox of a motor vehicle, having:
- a housing (1) and/or a frame,
- a shifting lever (2) which is designed to be pivotable about a selecting axis and a shifting axis, the selecting axis and the shifting axis being arranged preferably orthogonally in relation to one another, and the shifting lever (2) being shiftable at least into a first shifting gate and a second shifting gate, the first shifting gate preferably shifting shifting programmes P, N, R and D of an automatic gearbox and the second shifting gate preferably implementing manual tapping commands,
there being provided a shifting carriage (3) which is mounted such that it can be moved linearly in a plane and is designed such that the movement of the shifting lever (2) in the first shifting gate brings about a linear displacement of the shifting carriage due to a force coupling, and an uncoupling of the movement of the shifting lever (2) from the shifting carriage (3) is brought about by a movement of the shifting lever (2) in the second shifting gate, **characterised in that** a locking element (6) for fixing the shifting carriage (3) is provided, which locking element is actuated by the movement of the shifting lever (2) in the selecting axis and fixes the shifting carriage (3) as soon as the shifting lever (2) is in the second shifting gate, the locking element (6) being arranged pivotably on the shifting carriage (3) and, in the locking state, engaging in the housing (1) and/or the frame, the locking element (6) being pivoted by the movement of the shifting lever (2) in the selecting axis.

2. Shifting device according to the preceding Claim 1, **characterised in that** a coupling between the shifting carriage (3) and the automatic gearbox is provided.

3. Shifting device according to the preceding Claim 2, **characterised in that** the coupling comprises at least partly mechanical elements, preferably a cable (4).

4. Shifting device according to one of the preceding Claims 2 and 3, **characterised in that** the coupling is embodied at least partly by electrical elements.

5. Shifting device according to one of the preceding Claims 2 to 4, **characterised in that** the coupling is embodied at least partly by optical elements.

6. Shifting device according to one of the preceding Claims 1 to 5, **characterised in that** electrical and/or optical switches are arranged in the second shifting gate to implement the shifting commands.

7. Shifting device according to one of the preceding Claims 1 to 6, **characterised in that** an extension (5) of the shifting lever (2), which directly or indirectly engages in the shifting carriage (3), is provided for the force coupling of the shifting lever (2) and the shifting carriage (3).

8. Shifting device according to the preceding Claim 7, **characterised in that** the locking element (6) has a hook (7) and engages in recesses (7a) of the housing (1) and/or of the frame.

9. Shifting device according to one of the preceding Claims 1 to 8, **characterised in that** means for releasing the shifting carriage (3) are provided, which means release the force coupling between the shifting carriage (3) and the shifting lever (2) as soon as the shifting lever (2) is in the second shifting gate.

10. Shifting device according to the preceding Claim 9, **characterised in that** the release means is a release lever (8) which is mounted pivotably about an axis of the shifting carriage (3) and displaceably about this axis and is locked to the shifting carriage (3) in a first locking position and is designed to be displaceable in relation to the shifting carriage (3) in a second position.

11. Shifting device according to one of the preceding Claims 1 to 10, **characterised in that** the shifting carriage (3) has cutouts (11), in which the shifting lever (2) engages, and the cutouts (11) are configured such that a relative movement between the shifting lever (2) and the shifting carriage (3) is possible in the second shifting gate and there is a force coupling of the movement between the shifting lever (2) and the shifting carriage (3) in the first shifting gate.

12. Shifting device according to one of the preceding Claims 1 to 11, **characterised in that** the shifting lever (2) is guided directly or indirectly in a guide curve (12) in order to determine the shifting programmes P, N, R and D of the automatic gearbox and to produce an ergonomic shifting sensation.

13. Shifting device according to one of the preceding Claims 1 to 12, **characterised in that** the shifting lever (2) is mounted by means of a ball-and-socket joint (14).

14. Shifting device according to one of the preceding Claims 1 to 12, **characterised in that** the shifting lever (2) is mounted with two axes arranged crosswise in relation to one another.

15. Shifting device according to one of the preceding Claims 1 to 14, **characterised in that** a third shifting gate is provided, the two outer shifting gates preferably being designed symmetrically to the middle shifting gate.

## Revendications

1. Dispositif de commutation pour la transmission d'ordres de commutation à une boîte de vitesses automatique d'un véhicule automobile, comprenant :
- un boîtier (1) et/ou un cadre,
- un levier de commutation (2) monté de façon pivotante autour d'un axe de sélection et d'un axe de commutation, l'axe de sélection et l'axe de commutation étant de préférence disposés de façon orthogonale, l'un par rapport à l'autre, et le levier de commutation (2) pouvant être déplacé au moins dans un premier couloir de commutation et un deuxième couloir de commutation, le premier couloir de commutation assurant de préférence la conversion des séquences de commutation P, N, R et D d'une boîte de vitesses automatique, et le deuxième couloir de commutation assurant de préférence la conversion des ordres de commutation par impulsion manuelle,
un coulisseau de commutation (3) étant prévu, qui est monté de façon mobile en déplacement linéaire dans un plan, et qui est configuré de telle façon que, grâce à un couplage de force, le mouvement du levier de commutation (2) dans le premier couloir de commutation provoque un coulissement linéaire du coulisseau de commutation, et qu'un mouvement du levier de commutation (2) dans le deuxième couloir de commutation provoque un découplage du mouvement du levier de commutation (2) de celui du coulisseau de commutation (3),
**caractérisé en ce**
**qu'**un élément de verrouillage (6) est prévu pour arrêter le coulisseau de commutation (3), élément qui est actionné par le mouvement du levier de commutation (2) sur l'axe de sélection, et qui arrête le coulisseau de commutation (3), dès que le levier de commutation (2) se trouve dans le deuxième couloir de commutation, l'élément de verrouillage (6) étant disposé de façon pivotante sur le coulisseau de commutation (3) et s'engageant, à l'état de verrouillage (6), dans le boîtier (1) et/ou dans le cadre, l'élément de verrouillage (6) étant amené à pivoter par le mouvement du levier de commutation (2) sur l'axe de sélection.

2. Dispositif de commutation selon la revendication précédente 1,
**caractérisé en ce**
**qu'**un couplage est prévu entre le coulisseau de commutation (3) et la boîte de vitesses automatique.

3. Dispositif de commutation selon la revendication précédente 2,
**caractérisé en ce que**
le couplage comprend en partie au moins des éléments mécaniques, de préférence un câble de commande (4).

4. Dispositif de commutation selon l'une des revendications précédentes 2 et 3,
**caractérisé en ce que**
le couplage est réalisé au moins en partie par des éléments électriques.

5. Dispositif de commutation selon l'une des revendications précédentes 2 à 4,
**caractérisé en ce que**
le couplage est réalisé au moins en partie par des éléments optiques.

6. Dispositif de commutation selon l'une des revendications précédentes 1 à 5,
**caractérisé en ce que**
pour convertir les ordres de commutation émis dans le deuxième couloir de commutation, des commutateurs électriques et/ou optiques sont aménagés.

7. Dispositif de commutation selon l'une des revendications précédentes 1 à 6,
**caractérisé en ce que**
pour réaliser le couplage des forces entre le levier de commutation (2) et le coulisseau de commutation (3), un prolongement (5) du levier de commutation (2) est prévu, qui s'engage indirectement ou directement dans le coulisseau de commutation (3).

8. Dispositif de commutation selon la revendication précédente 7,
**caractérisé en ce que**
l'élément de verrouillage (6) comprend un crochet (7) et s'engage dans des évidements (7a) du boîtier (1) et/ou du cadre.

9. Dispositif de commutation selon l'une des revendications précédentes 1 à 8,
**caractérisé en ce que**
des moyens de déverrouillage du coulisseau de commutation (3) sont prévus, qui déverrouillent le couplage des forces entre le coulisseau de commutation (3) et le levier de commutation (2), dès que le levier de commutation (2) se trouve dans le deuxième couloir de commutation.

10. Dispositif de commutation selon la revendication précédente 9,
**caractérisé en ce que**
le moyen de déverrouillage est constitué par un levier de déverrouillage (8), qui est monté pivotant autour d'un axe du coulisseau de commutation (3), et coulissant autour de celui-ci, et qui, dans une première position de verrouillage, est verrouillé sur le coulisseau de commutation (3) et, dans une deuxième position, est guidé de façon coulissante par rapport au coulisseau de commutation (3).

11. Dispositif de commutation selon l'une des revendications précédentes 1 à 10,
**caractérisé en ce que**
le coulisseau de commutation (3) comporte des évidements (11) dans lesquels s'engage le levier de commutation (2), et que les évidements (11) sont configurés de telle manière qu'un mouvement relatif entre le levier de commutation (2) et le coulisseau de commutation (3) soit possible dans le deuxième couloir de commutation, et qu'un couplage des forces des mouvements entre le levier de commutation (2) et le coulisseau de commutation (3) soit assuré dans le premier couloir de commutation.

12. Dispositif de commutation selon l'une des revendications précédentes 1 à 11,
**caractérisé en ce que**
le levier de commutation (2) est guidé directement ou indirectement dans une came de guidage (12) de manière à définir les séquences de commutation P, N, R et D de la boîte de vitesses automatique, et à produire une sensation de changement de vitesse ergonomique.

13. Dispositif de commutation selon l'une des revendications précédentes 1 à 12,
**caractérisé en ce que**
le levier de commutation (2) est monté dans une articulation à rotule (14).

14. Dispositif de commutation selon l'une des revendications précédentes 1 à 12,
**caractérisé en ce que**
le levier de commutation (2) est monté sur deux axes croisés.

15. Dispositif de commutation selon l'une des revendications précédentes 1 à 14,
**caractérisé en ce**
**qu'**un troisième couloir de commutation est prévu, les deux couloirs de commutation extérieurs étant de préférence configurés de façon symétrique au couloir de commutation intérieur.
